# FASCICULE DE BREVET EUROPEEN

(11) **EP 3 201 443 B1**
(45) Date de publication et mention de la délivrance du brevet: **12.09.2018**
(21) Numéro de dépôt: 15775773.3
(22) Date de dépôt: 18.09.2015
(51) Int. Cl.: F01N 9/00

(54) **MOTEUR À COMBUSTION DE VÉHICULE AUTOMOBILE À PILOTAGE DE RICHESSE AMÉLIORÉ**
FAHRZEUGVERBRENNUNGSMOTOR MIT VERBESSERTER GEMISCHSTÄRKEREGELUNG
MOTOR VEHICLE COMBUSTION ENGINE WITH IMPROVED MIXTURE STRENGTH CONTROL

(30) Priorité: 03.10.2014 FR 1459460
(43) Date de publication de la demande: 09.08.2017
(73) Titulaire: PSA Automobiles SA, 78300 Poissy (FR)
(72) Inventeur: SCHEEN-VASSEUR, Gregory, 1170 Bruxelles (BE); DAMBRICOURT, Frédéric, F-78600 Maisons Laffitte (FR); CORNETTE, Annabelle, 92800 Puteaux (FR)
(74) Mandataire: Renous Chan, Véronique
(86) Numéro de dépôt international: PCT/FR2015/052508
(87) Numéro de publication internationale: WO 2016/051044

(56) Documents cités:
- GB-A- 2 439 566
- JP-A- 2005 337 194
- US-A1- 2014 130 588

## Description

L'invention concerne le contrôle moteur notamment pour les moteurs à essence, et plus particulièrement la régulation de richesse du mélange air/carburant par sonde proportionnelle.

La sonde proportionnelle est utilisée pour mesurer la richesse en amont du catalyseur et la réguler autour d'une consigne fixée par le contrôle moteur. La plupart du temps, cette consigne au niveau de la sonde est obtenue par l'utilisation d'un modèle représentant le comportement du système et de la sonde lorsque la consigne de richesse au niveau du cylindre est modifiée. Parfois, le régulateur de richesse lui-même utilise également un modèle du système et de la sonde.

Plusieurs solutions existent actuellement pour réguler une richesse par sonde proportionnelle. On connait notamment les régulateurs conventionnels, par exemple de type PID pour proportionnel, intégral et dérivé. On connait également des stratégies de régulation avancées, de conception robuste et à régulation à modèle interne.

Ces différentes régulations, plus ou moins avancées, ont toutes pour but d'assurer le meilleur suivi possible de la consigne de richesse, notamment dans des conditions dynamiques aussi bien qu'en régime stabilisé. La problématique principale du système à réguler dans le cas présent est qu'il présente typiquement un temps mort et un temps de réponse variables en fonction des conditions de fonctionnement. Pour compenser ces temps de retard et temps de réponse, un modèle interne est le plus souvent utilisé pour représenter le temps de transfert des gaz du moteur à la sonde ainsi que le temps de retard de la sonde ou temps de réponse de la sonde. Un tel modèle est utilisé pour convertir la consigne de richesse à l'injecteur en consigne de richesse à la sonde. Par ailleurs, le régulateur de richesse peut également inclure un modèle du système tel que par exemple un modèle direct, un modèle inverse, ou encore un prédicteur de Smith.

Les modèles utilisés pour construire la consigne de richesse à la sonde ou dans les régulateurs de richesse sont en général assez simples. Le modèle peut ainsi être constitué par un retard pur suivi d'un filtre d'ordre 1. Cette simplicité conduit souvent à surévaluer ou sous-évaluer l'erreur entre la consigne de richesse à la sonde et la mesure de richesse à la sonde. Cela peut mener à une correction inadéquate du régulateur, ou à devoir brider la dynamique de régulation de celui-ci pour éviter les oscillations de richesse. Ainsi, les modèles existant ne suffisent pas à reconstruire une consigne de richesse à la sonde qui soit représentative en cas de changement de consigne de richesse dans le cylindre. Le modèle peut s'avérer peu précis et s'écarter du comportement réel de la sonde. En d'autres termes, l'écart entre le modèle et la mesure de la sonde est interprété comme une erreur par le régulateur, qui agit à son tour pour la compenser. Cette action inutile génère des oscillations de richesse inutiles se traduisant par un surcoût en termes d'émissions du moteur. Pour éviter ces oscillations, la dynamique de régulation pourrait être réduite, mais cela impliquerait un rejet de perturbations par le régulateur lequel deviendrait moins efficace. Là encore, cela génèrerait des émissions supplémentaires.

La demande de brevet GB 2 439 566 aborde cette thématique, mais ne fait que proposer de l'adaptation de compensation par la mesure de richesse. La demande de brevet JP2005 337194 mentionne l'utilisation d'un filtre, mais un filtre passe bande pour adapter la correction de la mesure de richesse globale à chaque cylindre. Ce filtre passe bande est un filtre connu pour le traitement du signal, à ne pas confondre avec les modèles mathématiques dits filtres d'ordre 1 ou 2 notamment. La demande de brevet US2014130588 corrige la mesure de richesse en fonction de la température mesurée.

Le but de l'invention est de proposer un moteur dans lequel la régulation de richesse par utilisation d'une sonde sur la ligne d'échappement soit efficace et peu génératrice d'émissions polluantes.

Ce but est atteint selon l'invention grâce à un moteur à combustion de véhicule automobile comprenant au moins un cylindre de combustion, une ligne d'échappement, une sonde de richesse disposée sur la ligne d'échappement, un module de détermination de consigne de richesse à la sonde en fonction d'une consigne de richesse dans ledit au moins un cylindre de combustion, le module de détermination étant configuré pour déterminer la consigne de richesse à la sonde en utilisant une première règle de calcul, et un module de régulation lequel est configuré pour déterminer une correction de richesse à appliquer dans ledit au moins un cylindre selon une première règle de calcul en fonction d'une valeur représentative d'un écart entre une richesse mesurée par la sonde et la consigne de richesse à la sonde, tel que le module de détermination de consigne de richesse à la sonde ou le module de régulation est configuré pour utiliser respectivement une deuxième règle de calcul de la consigne de richesse à la sonde et/ou une deuxième règle de calcul de la correction à appliquer laquelle deuxième règle de calcul est différente de la première règle de calcul respectivement de la consigne de richesse ou de la correction à appliquer, et le moteur comporte un module de sélection recevant au moins une valeur (d) d'un paramètre de fonctionnement du moteur, le module de sélection étant configuré pour sélectionner une règle de calcul utilisée par le module de détermination de la consigne de richesse à la sonde ou par le module de régulation parmi la première règle et la deuxième règle de calcul respectivement de la consigne de richesse ou de la correction à appliquer en fonction de ladite au moins une valeur d'un paramètre de fonctionnement du moteur.

L'invention prévoit une bibliothèque de régulateurs (modèles), et choisit le plus approprié en fonction d'un paramètre de fonctionnement du moteur, du régime par exemple. Le modèle prend en compte la distance séparant la sonde de richesse, qui se trouve en aval du moteur, dans la ligne d'échappement, pour en déduire/en recalculer une mesure corrigée de richesse dans les cylindres. Cette bibliothèque permet de corriger la mesure de richesse de la façon la plus précise possible, dans toute la gamme de plages de fonctionnement du moteur.

Avantageusement, le paramètre de fonctionnement du moteur fait partie du groupe comprenant une valeur indicative de régime du moteur, une valeur indicative de couple produit par le moteur, une valeur indicative de débit de gaz d'échappement et une valeur indicative de température.

Avantageusement, le paramètre de fonctionnement du moteur est une valeur indicative de la température de la sonde.

Avantageusement, le paramètre de fonctionnement du moteur est un paramètre indicatif du fait que le moteur est en régime de ralenti ou non.

Avantageusement, le paramètre de fonctionnement du moteur est une mesure de débit de gaz d'échappement. Ce débit est représentatif du rapport régime/charge du moteur.

Avantageusement, le paramètre de fonctionnement du moteur est un balayage. On rappelle que, de façon connue, un balayage est un paramètre consistant à faire passer de l'air à l'échappement (en ouvrant à la fois la soupape d'admission et d'échappement) afin de balayer les imbrûlés, et d'augmenter le débit des gaz d'échappement, permettant notamment de charger plus vite un éventuel turbocompresseur.

De préférence, la première règle de calcul est un filtre d'ordre 1.

Avantageusement, le module de détermination de consigne de richesse à la sonde est configuré pour utiliser une deuxième règle de calcul de la consigne de richesse à la sonde et la deuxième règle de calcul de la consigne de richesse à la sonde est un filtre linéaire de la consigne de richesse au cylindre.

Avantageusement, le module de détermination de consigne de richesse à la sonde est configuré pour utiliser une deuxième règle de calcul de la consigne de richesse à la sonde et la deuxième règle de calcul de la consigne de richesse à la sonde est un filtre d'ordre 2 de la consigne de richesse au cylindre.

Avantageusement, le module de régulation est configuré pour utiliser une deuxième règle de calcul de la correction à appliquer et la deuxième règle de calcul est un prédicteur de Smith.

Avantageusement, le module de détermination de la consigne de richesse à la sonde et le module de sélection sont constitués par un même organe prévu pour être monté de manière monobloc dans le véhicule.

Avantageusement, le module de détermination de la consigne de richesse à la sonde et le module de régulation sont constitués par un même organe prévu pour être monté de manière monobloc dans le véhicule.

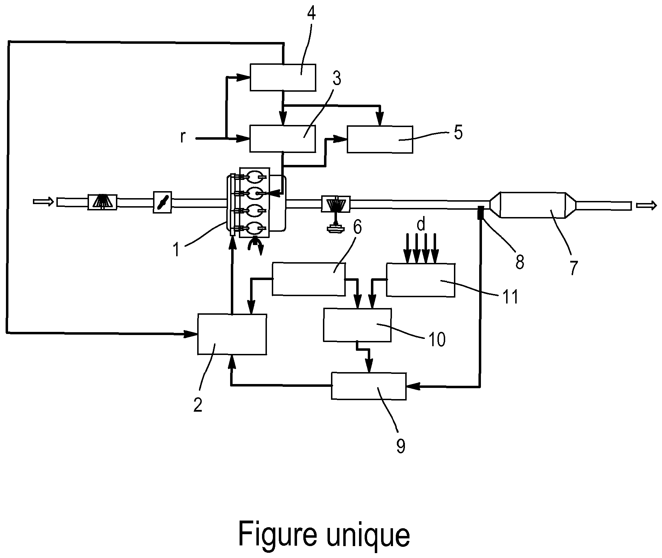

D'autres caractéristiques, buts et avantages de l'invention apparaitront à la lecture de la description détaillée qui va suivre, faite en référence à la figure unique annexée, laquelle représente un moteur selon un mode de réalisation de l'invention.

Le moteur représenté sur la figure comporte un bloc moteur 1, un module de calcul d'injection et de compensations 2, un module de calcul d'avances 3 et un module de calcul de remplissage 4 réalisant tous deux leur calcul à partir d'une demande de couple et de réserve r. Le moteur comporte en outre ici un module d'estimation de température d'échappement 5 et un module de détermination de consigne de richesse au cylindre 6.

Le moteur comporte également un catalyseur de dépollution des gaz d'échappement 7 et une sonde de richesse de type proportionnelle 8 disposée sur la ligne d'échappement, avantageusement en amont du catalyseur 7 et ici plus spécifiquement en entrée du catalyseur 7. Le module de détermination de la consigne de richesse au cylindre 6 permet de fournir à un régulateur 9 de richesse (la partie régulation du régulateur de richesse) en amont du catalyseur une valeur de consigne de richesse en amont du catalyseur. Pour cela, le module 6 de détermination de la consigne de richesse au cylindre fournit la consigne de richesse cylindre à un module 10 de mise en oeuvre de modèles de richesse sonde 10, lequel fournit à son tour une telle valeur de richesse en entrée du catalyseur après application de l'un de ces modèles. Le prétraitement de l'information richesse se fait entre la sonde 8 et le module 9.

Le modèle utilisé pour la détermination de la valeur de richesse à obtenir en entrée du catalyseur est sélectionné en fonction du résultat d'un analyse de situation de vie réalisée par un module d'analyse 11 à partir de données de capteurs d. Ce module 11 est un sélecteur pour choisir le régulateur, le modèle approprié, c'est le « manager » selon le terme usuellement employé en contrôle commande.

Ainsi, entre la consigne de richesse cylindre et la régulation de richesse à la sonde 8, on met en oeuvre un modèle convertissant la consigne cylindre en consigne sonde et, dans le présent exemple, également un modèle interne au régulateur. Ces deux modèles sont sélectionnés au cours de la durée de vie du moteur en fonction de la situation de vie de ce dernier.

Un exemple de sélection du modèle de sonde consiste en l'utilisation d'un filtre d'ordre un comme modèle de base du temps de réponse de la sonde et le passage à un modèle linéaire ou un filtre d'ordre deux dans le cas d'un fonctionnement du moteur au ralenti. On procède avantageusement alors à un changement du modèle interne au régulateur 9 pour un prédicteur de Smith pour être conforme au modèle de sonde linéaire ou d'ordre deux.

Selon un autre exemple, on utilise un filtre d'ordre un comme modèle de base du temps de réponse de la sonde et on passe à un filtre d'ordre deux dans le cas d'une sonde n'étant pas encore à température de fonctionnement optimale, la dynamique du signal de sonde étant plus faible lorsque la sonde est à température inférieure à sa température de fonctionnement nominale. On change alors avantageusement le modèle interne au régulateur 9 pour un prédicteur de Smith dans le cas du filtre d'ordre deux pour être conforme à ce modèle de sonde.

Un exemple de sélection du régulateur 9 seul selon les situations de fonctionnement, sans changement de modèle de sonde, consiste en une compensation du retard de sonde à faible débit de gaz d'échappement, compensant le retard plus important, en utilisant un régulateur avec prédicteur de Smith, et en utilisant un régulateur à fonction de transfert H infinie à plus fort débit.

Le contenu de la fonction d'analyse de situation de vie mise en oeuvre par le module 11 peut être variable selon le nombre de situations de vie qui ont été identifiées et les modèles systèmes qui y sont associés. Par exemple, si un premier modèle est adopté au ralenti et un deuxième modèle est adopté pour toutes les autres conditions de fonctionnement, la fonction de détection des situations de vie se limite simplement à repérer le moment où le régime et la charge moteur correspondent au ralenti.

Pour chaque situation de vie identifiée, on sélectionne un modèle système adéquat et/ou un régulateur adéquat. Lors du changement de situation de vie, on assure l'initialisation appropriée du modèle système et du régulateur. La continuité de l'information en entrée et en sortie des modèles système et des régulateurs est donc assurée à l'initialisation de chacun d'entre eux. En cas de changement de modèle et régulateur, les valeurs d'entrée et de sortie des modèles utilisés au pas de calcul précédent doivent leur être fournies pour leur initialisation. Le nombre de modèles disponibles correspond aux nombre de situations de vies pour lesquelles un comportement particulier du système est observé et n'est à priori limité que par la capacité du calculateur moteur à héberger tous ces modèles ou régulateurs. Pour éviter toute surcharge en termes de capacité de traitement du calculateur, il est préférable de désactiver les modèles et régulateurs non-utilisés.

Ainsi on fournit ici un modèle système permettant de reconstruire une consigne de richesse à la sonde pour chaque condition de fonctionnement moteur. Une fonction d'analyse des conditions de fonctionnement moteur est en charge de sélectionner le modèle le plus approprié en fonction des situations de vie parmi un ensemble de modèles différents. Lorsque la situation de vie change, le bon modèle est sélectionné, initialisé, et ses résultats peuvent alors être utilisés pour construire l'image la plus précise possible de ce que devrait être la consigne de richesse à la sonde. Cette consigne au niveau de la sonde peut alors être utilisée en entrée du régulateur pour calculer l'erreur de suivi de richesse et la corriger.

Le même principe est avantageusement utilisé pour le régulateur. Si celui-ci utilise un modèle interne, modèle inverse, un prédicteur de Smith ou toute autre stratégie s'appuyant sur un modèle du système à contrôler, on préfère utiliser un modèle interne au régulateur correspondant à celui utilisé pour la consigne de richesse au niveau de la sonde. Si le régulateur est dépourvu de modèle interne, on choisit avantageusement le mode de régulation le plus approprié en fonction de la situation de vie. En variante on adopte un seul régulateur dans l'ensemble des choix possibles.

Selon un mode de réalisation de l'invention, on encapsule l'une ou l'autre des fonctionnalités mentionnées ci-dessus dans une fonction plus générale. Par exemple on embarque le modèle pour la construction de la richesse à la sonde dans le régulateur au niveau de la construction de l'erreur à corriger. Ceci peut être fait même si le régulateur ne dispose pas d'un modèle interne. Une autre variante est de n'appliquer les fonctionnalités que sur le modèle pour la construction de la consigne sonde ou, à contrario, de n'appliquer ces fonctionnalités que sur le régulateur.

On réalise dans le présent exemple une sélection du modèle pour la construction de la consigne de richesse à la sonde en fonction des situations de vie. On sélectionne ici également le régulateur en fonction des situations de vie, ce choix pouvant se faire parmi un ensemble de régulateurs à modèle interne ou non, ou parmi un ensemble de régulateurs incluant n'importe quel type de régulateur. On met donc ici en oeuvre deux modèles différents du système constitué de la ligne et de la sonde dont on utilise les résultats selon la situation de vie dans laquelle le moteur et la sonde fonctionnent. Bien entendu, on peut mettre en oeuvre un nombre de modèles supérieur à deux. Lorsqu'une situation de vie spécifique est détectée, le modèle adéquat pour la construction de consigne de richesse à la sonde est initialisé et ses résultats sont ensuite exploités pour la construction de la consigne de richesse à la sonde. Le type de régulateur, qui peut inclure un modèle interne ou non, est avantageusement choisi également en fonction de la situation de vie

On sélectionne plus généralement ou bien le modèle pour la construction de la consigne de richesse à la sonde ou bien le régulateur, ou bien les deux, en fonction des situations de vie.

L'avantage ici est d'offrir la meilleure estimation possible de la consigne de richesse à la sonde quelle que soit la situation de vie. Cela permet d'estimer au plus juste l'erreur de suivi de richesse à la sonde et donc de ne solliciter le régulateur qu'au strict nécessaire. Par ailleurs, un tel dispositif permet également de choisir le type de régulation le plus approprié en fonction des situations de vie pour le mettre en cohérence avec un modèle de sonde différent ou pour simplement sélectionner le type de régulateur le plus adéquat. La calibration de la dynamique de régulation est donc moins contrainte et peut se permettre d'être plus rapide. Cela assure un meilleur rejet des perturbations réelles de richesse et donc un meilleur suivi de la consigne. Au final, selon la consigne de richesse demandée, on diminue les émissions du moteur, on assure une meilleure protection des composants de la ligne d'échappement, et on assure un meilleur agrément de conduite ainsi qu'une meilleure stabilité du moteur. Au final, on en tire une réduction du coût de la définition de la catalyse, une réduction des coûts liés aux processus qualité liés à un vieillissement prématuré ou à un endommagement des composants de la ligne d'échappement, et une réduction de la consommation de carburant. La solution proposée ne génère que peu de surcoût par rapport aux solutions déjà en place sur les véhicules pour une régulation de richesse par sonde proportionnelle.

## Revendications

1. Moteur à combustion de véhicule automobile comprenant au moins un cylindre de combustion (1), une ligne d'échappement, une sonde de richesse (8) disposée sur la ligne d'échappement, un module (10) de détermination de consigne de richesse à la sonde en fonction d'une consigne de richesse dans ledit au moins un cylindre de combustion (1), le module de détermination (10) étant configuré pour déterminer la consigne de richesse à la sonde (8) en utilisant une première règle de calcul, et un module de régulation (9) lequel est configuré pour déterminer une correction de richesse à appliquer dans ledit au moins un cylindre (1) selon une première règle de calcul en fonction d'une valeur représentative d'un écart entre une richesse mesurée par la sonde (8) et la consigne de richesse à la sonde, **caractérisé en ce que** le module de détermination (10) de consigne de richesse à la sonde ou le module de régulation (9) est configuré pour utiliser respectivement une deuxième règle de calcul de la consigne de richesse à la sonde (8) ou une deuxième règle de calcul de la correction à appliquer laquelle deuxième règle de calcul est différente de la première règle de calcul respectivement de la consigne de richesse ou de la correction à appliquer, et le moteur comporte un module de sélection (11) recevant au moins une valeur (d) d'un paramètre de fonctionnement du moteur, le module de sélection (11) étant configuré pour sélectionner une règle de calcul utilisée par le module de détermination (10) de la consigne de richesse à la sonde ou par le module de régulation (9) parmi la première règle et la deuxième règle de calcul respectivement de la consigne de richesse ou de la correction à appliquer en fonction de ladite au moins une valeur (d) d'un paramètre de fonctionnement du moteur.

2. Moteur à combustion selon la revendication 1, **caractérisé en ce que** le paramètre de fonctionnement du moteur (d) fait partie du groupe comprenant une valeur indicative de régime du moteur, une valeur indicative de couple produit par le moteur, une valeur indicative de débit de gaz d'échappement et une valeur indicative de température.

3. Moteur à combustion selon la revendication 2, **caractérisé en ce que** le paramètre de fonctionnement du moteur (d) est une valeur indicative de la température de la sonde (8).

4. Moteur à combustion selon l'une quelconque des revendications précédentes, **caractérisé en ce que** le paramètre de fonctionnement du moteur (d) est un paramètre indicatif du fait que le moteur est en régime de ralenti ou non.

5. Moteur à combustion selon l'une quelconque des revendications précédentes, **caractérisé en ce que** le paramètre de fonctionnement du moteur (d) est une mesure de débit de gaz d'échappement.

6. Moteur à combustion selon l'une quelconque des revendications précédentes, **caractérisé en ce que** le paramètre de fonctionnement du moteur (d) est un balayage.

7. Moteur à combustion selon l'une quelconque des revendications précédentes, **caractérisé en ce que** la première règle de calcul est un filtre d'ordre 1.

8. Moteur à combustion selon l'une quelconque des revendications précédentes, **caractérisé en ce que** la deuxième règle de calcul de la consigne de richesse à la sonde (8) est un filtre linéaire de la consigne de richesse au cylindre (1).

9. Moteur à combustion selon l'une quelconque des revendications 1 à 6, **caractérisé en ce que** la deuxième règle de calcul de la consigne de richesse à la sonde (8) est un filtre d'ordre 2 de la consigne de richesse au cylindre (1).

10. Moteur à combustion selon l'une quelconque des revendications précédentes, **caractérisé en ce que** le module de régulation (9) est configuré pour utiliser une deuxième règle de calcul de la correction à appliquer et la deuxième règle de calcul est un prédicteur de Smith.

11. Moteur à combustion selon l'une quelconque des revendications précédentes, **caractérisé en ce que** le module (10) de détermination de la consigne de richesse à la sonde (8) et le module de sélection (11) sont constitués par un même organe prévu pour être monté de manière monobloc dans le véhicule.

12. Moteur à combustion selon l'une quelconque des revendications précédentes, **caractérisé en ce que** le module (10) de détermination de la consigne de richesse à la sonde (8) et le module de régulation (9) sont constitués par un même organe prévu pour être monté de manière monobloc dans le véhicule.

## Patentansprüche

1. Fahrzeugverbrennungsmotor, der mindestens einen Verbrennungszylinder (1), einen Abgasstrang, eine Gemischstärkesonde (8), die auf dem Abgasstrang angeordnet ist, ein Bestimmungsmodul (10) des Sollwerts der Gemischstärke an der Sonde in Abhängigkeit von einem Gemischstärkesollwert in dem mindestens einen Verbrennungszylinder (1), wobei das Bestimmungsmodul (10) konfiguriert ist, um den Gemischstärkesollwert an der Sonde (8) unter Verwenden einer ersten Berechnungsregel zu bestimmen, und ein Regelungsmodul (9) umfasst, das konfiguriert ist, um eine Gemischstärkekorrektur zu bestimmen, die in dem mindestens einen Zylinder (1) gemäß einer ersten Berechnungsregel in Abhängigkeit von einem Wert, der für einen Unterschied zwischen einer Gemischstärke, die von der Sonde (8) gemessen wird, und dem Gemischstärkesollwert an der Sonde repräsentativ ist, anzuwenden ist, **dadurch gekennzeichnet, dass** das Bestimmungsmodul des Gemischstärkesollwerts an der Sonde oder das Regelungsmodul (9) konfiguriert ist, um jeweils eine zweite Berechnungsregel des Gemischstärkesollwerts an der Sonde (8) oder eine zweite Berechnungsregel der Korrektur, die an die zweite Berechnungsregel anzuwenden ist, von der ersten Berechnungsregel jeweils des Gemischstärkesollwerts oder der anzuwendenden Korrektur unterschiedlich ist, und der Motor ein Auswahlmodul (11) umfasst, das mindestens einen Wert (d) eines Betriebsparameters des Motors empfängt, wobei das Auswahlmodul (11) konfiguriert ist, um eine Berechnungsregel auszuwählen, die von dem Bestimmungsmodul (10) des Gemischstärkesollwerts an der Sonde oder von dem Regelungsmodul (9) jeweils der ersten und der zweiten Berechnungsregel des Gemischstärkesollwerts oder der Korrektur, die in Abhängigkeit von mindestens einem Wert (d) eines Betriebsparameters des Motors anzuwenden ist.

2. Verbrennungsmotor nach Anspruch 1, **dadurch gekennzeichnet, dass** der Betriebsparameter des Motors (d) zu der Gruppe gehört, die einen Richtwert der Drehzahl des Motors, einen Richtwert des Drehmoments, das von dem Motor erzeugt wird, einen Richtwert des Abgasdurchsatzes und einen Richtwert der Temperatur umfasst.

3. Verbrennungsmotor nach Anspruch 2, **dadurch gekennzeichnet, dass** der Betriebsparameter (d) des Motors ein Richtwert der Temperatur der Sonde (8) ist.

4. Verbrennungsmotor nach einem der vorhergehenden Ansprüche, **dadurch gekennzeichnet, dass** der Betriebsparameter (d) des Motors ein Parameter ist, der auf die Tatsache hinweist, dass der Motor im Leerlauf ist oder nicht.

5. Verbrennungsmotor nach einem der vorhergehenden Ansprüche, **dadurch gekennzeichnet, dass** der Betriebsparameter (d) des Motors eine Abgasdurchsatzmessung ist.

6. Verbrennungsmotor nach einem der vorhergehenden Ansprüche, **dadurch gekennzeichnet, dass** der Betriebsparameter (d) des Motors ein Abtasten ist.

7. Verbrennungsmotor nach einem der vorhergehenden Ansprüche, **dadurch gekennzeichnet, dass** die erste Berechnungsregel ein Filter des Rangs 1 ist.

8. Verbrennungsmotor nach einem der vorhergehenden Ansprüche, **dadurch gekennzeichnet, dass** die zweite Berechnungsregel des Gemischstärkesollwerts an der Sonde (8) ein lineares Filter des Gemischstärkesollwerts an dem Zylinder (1) ist.

9. Verbrennungsmotor nach einem der Ansprüche 1 bis 6, **dadurch gekennzeichnet, dass** die zweite Berechnungsregel des Gemischstärkesollwerts an der Sonde (8) ein Filter des Rangs 2 des Gemischstärkesollwerts an dem Zylinder (1) ist.

10. Verbrennungsmotor nach einem der vorhergehenden Ansprüche, **dadurch gekennzeichnet, dass** das Regelungsmodul (9) konfiguriert ist, um eine zweite Berechnungsregel der anzuwendenden Korrektur zu verwenden, und die zweite Berechnungsregel ein Smith-Prädiktor ist.

11. Verbrennungsmotor nach einem der vorhergehenden Ansprüche, **dadurch gekennzeichnet, dass** das Bestimmungsmodul (10) des Gemischstärkesollwerts an der Sonde (8) und das Auswahlmodul (11) aus einem selben Element bestehen, das vorgesehen ist, um einstückig in dem Fahrzeug montiert zu sein.

12. Verbrennungsmotor nach einem der vorhergehenden Ansprüche, **dadurch gekennzeichnet, dass** das Bestimmungsmodul (10) des Gemischstärkesollwerts an der Sonde (8) und das Regelungsmodul (9) aus einem selben Element bestehen, das vorgesehen ist, um einstückig in das Fahrzeug montiert zu werden.

## Claims

1. A motor vehicle combustion engine including at least one combustion cylinder (1), an exhaust line, a richness sensor (8) disposed on the exhaust line, a module (10) for determining a richness setpoint at the sensor as a function of a richness setpoint in said at least one combustion cylinder (1), the determining module (10) being configured to determine the richness setpoint at the sensor (8) by using a first calculation rule, and a regulation module (9) which is configured to determine a richness correction to be applied in said at least one cylinder (1) according to a first calculation rule as a function of a representative value of a difference between a richness measured by the sensor (8) and the richness setpoint at the sensor, **characterized in that** the determining module (10) of the richness setpoint at the sensor or the regulation module (9) is configured to use respectively a second calculation rule of the richness setpoint at the sensor (8) or a second calculation rule of the correction to be applied, which second calculation rule is different from the first calculation rule respectively of the richness setpoint or of the correction to be applied, and the engine comprises a selection module (11) receiving at least one value (d) of an operating parameter of the engine, the selection module (11) being configured to select a calculation rule used by the determining module (10) of the richness setpoint at the sensor or by the regulation module (9) from the first calculation rule and the second calculation rule respectively of the richness setpoint or of the correction to be applied as a function of said at least one value (d) of an operating parameter of the engine.

2. The combustion engine according to Claim 1, **characterized in that** the operating parameter of the engine (d) forms part of the group including an indicative value of engine speed, an indicative value of torque produced by the engine, an indicative value of exhaust gas flow and an indicative value of temperature.

3. The combustion engine according to Claim 2, **characterized in that** the operating parameter of the engine (d) is an indicative value of the temperature of the sensor (8).

4. The combustion engine according to any one of the preceding claims, **characterized in that** the operating parameter of the engine (d) is an indicative parameter of the fact that the engine is at idling speed or not.

5. The combustion engine according to any one of the preceding claims, **characterized in that** the operating parameter of the engine (d) is a measurement of exhaust gas flow.

6. The combustion engine according to any one of the preceding claims, **characterized in that** the operating parameter of the engine (d) is a scavenging.

7. The combustion engine according to any one of the preceding claims, **characterized in that** the first calculation rule is a first order filter.

8. The combustion engine according to any one of the preceding claims, **characterized in that** the second calculation rule of the richness setpoint at the sensor (8) is a linear filter of the richness setpoint at the cylinder (1).

9. The combustion engine according to any one of Claims 1 to 6, **characterized in that** the calculation rule of the richness setpoint at the sensor (8) is a second order filter of the richness setpoint at the cylinder (1) .

10. The combustion engine according to any one of the preceding claims, **characterized in that** the regulation module (9) is configured to use a second calculation rule of the correction to be applied and the second calculation rule is a Smith predictor.

11. The combustion engine according to any one of the preceding claims, **characterized in that** the determining module (10) of the richness setpoint at the sensor (8) and the selection module (11) are constituted by the same member provided to be mounted in a one-piece manner in the vehicle.

12. The combustion engine according to any one of the preceding claims, **characterized in that** the determining module (10) of the richness setpoint at the sensor (8) and the regulation module (9) are constituted by the same member provided to be mounted in a one-piece manner in the vehicle.
